# EUROPÄISCHE PATENTSCHRIFT

(11) **EP 2 196 344 B1**
(45) Veröffentlichungstag und Bekanntmachung des Hinweises auf die Patenterteilung: **16.02.2011**
(21) Anmeldenummer: 09014194.6
(22) Anmeldetag: 13.11.2009
(51) Int. Cl.: B60K 5/12, F16F 13/10

(54) **Hydrolager und Düsenkäfig dafür**
Hydraulic support and corresponding partition member
Support hydraulique et cloison de découplage correspondante

(30) Priorität: 15.12.2008 DE 102008061869
(43) Veröffentlichungstag der Anmeldung: 16.06.2010
(73) Patentinhaber: Carl Freudenberg KG, 69469 Weinheim (DE)
(72) Erfinder: Beckmann, Wolfgang, 64289 Darmstadt (DE)

(56) Entgegenhaltungen:
- EP-A1- 1 304 498
- DE-A1- 10 213 996
- FR-A2- 2 392 285

## Beschreibung

### Technisches Gebiet

Die Erfindung betrifft ein Hydrolager, umfassend einen Kern und ein Gehäuse, die durch eine im wesentlichen hohlkegelförmige Tragfeder aus gummielastischem Werkstoff miteinander verbunden sind und einen Arbeits-und einen Ausgleichsraum, die jeweils mit Dämpfungsflüssigkeit gefüllt und strömungsleitend miteinander verbunden sind, wobei der Arbeits- und der Ausgleichsraum auf ihren einander axial zugewandten Seiten durch eine Trennwand voneinander getrennt sind, wobei die Trennwand einen den Arbeits-und den Ausgleichsraum verbindenden Dämpfungskanal zur Dämpfung tieferfrequenter Schwingungen aufweist und einen Düsenkäfig umfasst, der durch zwei mit axialem Abstand zueinander benachbart angeordnete Düsenscheiben gebildet ist, die jeweils eine erste Gitterstruktur mit Ausnehmungen aufweisen, wobei in dem durch den Abstand gebildeten Spalt eine Membran zur Isolierung höherfrequenter Schwingungen schwingfähig angeordnet ist.

### Stand der Technik

Derartige Hydrolager sind allgemein bekannt, beispielsweise aus der DE 102 13996 A1. Bei den vorbekannten Hydrolagern, die zum Beispiel in Kraftfahrzeugen zur Abstützung des Motors gegenüber der Karosserie zur Anwendung gelangen, haben die Düsenscheiben des Düsenkäfigs jeweils nur eine Gitterstruktur mit Stegen und zwischen den Stegen angeordneten Ausnehmungen. Die Membran, die zum Beispiel aus einem gummielastischen Werkstoff bestehen kann, bewegt sich in Richtung der eingeleiteten Schwingungen zwischen den Gitterstrukturen der axial benachbarten Düsenscheiben hin und her, um höherfrequente kleinamplitudige Schwingungen zu isolieren. Solche Schwingungen können beispielsweise aufgrund der Rauhigkeit einer Fahrbahnoberfläche und/oder eines Reifenprofils, das auf der Fahrbahnoberfläche abrollt, entstehen. Bei Dämpfung tieffrequenter großamplitudiger Schwingungen, wie sie beispielsweise entstehen, wenn mit einem Kraftfahrzeug über einen Bordstein gefahren wird, legt sich die Membran durch die Druckerhöhung im Arbeitsraum an die Düsenscheibe, die im Ausgleichsraum angeordnet ist, an, und die Dämpfungsflüssigkeit verlagert sich vom Arbeitsraum durch den Dämpfungskanal in den Ausgleichsraum und anschließend wieder zurück. Der Ausgleichsraum ist auf der dem Düsenkäfig axial abgewandten Seite durch eine im Wesentlichen drucklose Volumen aufnehmende rollbalgförmig ausgebildete Abschlussmembran begrenzt.

Während der bestimmungsgemäßen Verwendung kann das Hydrolager jedoch auch periodischen Schwingungen mit hohen Frequenzen und großen Amplituden ausgesetzt sein, wobei eine derartige Schwingung zu Klappergeräuschen führen kann. Ursache dafür ist eine plötzliche Änderung des Lagerinnendrucks in Folge eines Nachgebens der Membran in Richtung des Raums, in dem der relativ niedrigere Druck herrscht, also beispielsweise in Richtung des Ausgleichsraums.

### Darstellung der Erfindung

Der Erfindung liegt die Aufgabe zu Grunde, ein Hydrolager der vorbekannten Art derart weiter zu entwickeln, dass Klappergeräusche des Hydrolagers auch dann zuverlässig vermieden werden, wenn periodische Schwingungen mit hohen Frequenzen und großen Amplituden in das Hydrolager eingeleitet werden. Insbesondere soll die Membran im Düsenkäfig während des zuvor geschilderten Betriebszustands besser abgestürzt werden.

Diese Aufgabe wird erfindungsgemäß durch ein Hydrolager gemäß Anspruch 1 und einen Düsenkäfig gemäß Anspruch 21 gelöst. Auf vorteilhafte Ausgestaltungen nehmen die Unteransprüche Bezug.

Zur Lösung der gestellten Aufgabe ist ein Hydrolager vorgesehen, bei dem zumindest eine der Düsenscheiben zumindest eine weitere zweite Gitterstruktur mit Anschlägen für die Membran aufweist, die auf der der Membran axial abgewandten Seite der ersten Gitterstruktur der Düsenscheibe angeordnet ist, wobei die erste Gitterstruktur und die zweite Gitterstruktur eine sich in axialer Richtung erstreckende Rampe für die Membran bilden.

Unter einer Schwingung mit hohen Frequenzen und großen Amplituden wird im vorliegenden Fall eine Schwingung verstanden, mit einer Frequenz von 8 Hz bis 50 Hz und einer Amplitude von ± 0,6 mm bis ± 3 mm.

Eine Ausgestaltung der Düsenscheibe mit zwei Gitterstrukturen, die in einer funktionstechnischen Reihenschaltung angeordnet und axial in der Höhe durch die Rampe versetzt zueinander angeordnet sind, bedingt eine verbesserte Abstützung der Membran innerhalb des Düsenkäfigs, wenn das Hydrolager periodischen Schwingungen mit hohen Frequenzen und großen Amplituden ausgesetzt ist. Auch bei plötzlich sich änderndem Lagerinnendruck wird die Membran durch die zweite Gitterstruktur ausreichend stark abgestürzt, so dass Klappergeräusche des Hydrolagers vermieden werden.

Die zweite Gitterstruktur ist, bezogen auf die erste Gitterstruktur, durch die Rampe in der Höhe axial in Richtung der eingeleiteten Schwingungen versetzt, so dass unerwünscht hohe Deformationen der Membran stets ausgeschlossen sind, ohne dass das Betriebsverhalten des Hydrolagers im normalen Fahrbetrieb, insbesondere die Isolierung höherfrequenter kleinamplitudiger Schwingungen, nachteilig beeinflusst würde.

Gemäß einer vorteilhaften Ausgestaltung kann es vorgesehen sein, dass nur die im Ausgleichsraum angeordnete Düsenscheibe die zweite Gitterstruktur aufweist. Für die meisten Anwendungsfälle ist eine derartige Ausgestaltung ausreichend. Wird das Hydrolager während des normalen Fahrbetriebs plötzlich durch Einleitung einer Schwingung mit großer Amplitude zusammengestaucht, legt sich die Membran durch den plötzlichen Überdruck im Arbeitsraum zunächst an die erste Gitterstruktur, dann an die zweite Gitterstruktur der Düsenscheibe an, die im Ausgleichsraum, der den vergleichsweise geringeren Druck aufweist, angeordnet ist. Gleichzeitig verlagert sich Dämpfungsflüssigkeit vom Arbeitsraum durch den Dämpfungskanal in den Ausgleichsraum. Dadurch wird die Bewegung des Kerns des Hydrolagers axial in Richtung des Ausgleichsraums bereits gedämpft. Beim anschließenden ausfedern ist ein Teil der Energie bereits abgebaut, so dass die erste Gitterstruktur der Düsenscheibe, die im Arbeitsraum angeordnet ist, praktisch immer ausreicht, die Membran ausreichend abzustürzen.

Die zweite Gitterstruktur kann stegförmige Anschläge für die Membran aufweisen, die die Ausnehmungen der ersten Gitterstruktur in radialer Richtung teilweise überdecken. Die in die jeweilige Ausnehmung projizierte Fläche des jeweiligen Stegs ist, bezogen auf die Fläche der Ausnehmung, sehr klein. Das Verhältnis aus der Fläche der Ausnehmung zur projizierten Fläche des Stegs beträgt bevorzugt 10 bis 30, weiter bevorzugt 20. Dadurch, dass die projizierte Fläche des Stegs bezogen auf die Fläche der Ausnehmung nur sehr klein ist, hat die zweite Gitterstruktur praktisch keinen nachteiligen Einfluss auf die Wirksamkeit der Isolierung höherfrequenter kleinamplitudiger Schwingungen des Hydrolagers. Trotzdem erfüllt die zweite Gitterstruktur gut die Aufgabe der Abstützung der Membran, wenn Schwingungen hoher Frequenz und großer Amplitude in das Hydrolager eingeleitet werden; Klappergeräusche werden durch die gute Abstützung der Membran durch die zweite Gitterstruktur wirkungsvoll verhindert.

Die Anzahl der Anschläge entspricht bevorzugt der Anzahl der Ausnehmungen. Hierbei ist von Vorteil, dass die Membran im Bereich einer jeden Ausnehmung der ersten Gitterstruktur bedarfsweise abgestützt wird.

Die Anschläge und die Ausnehmungen können jeweils gleichmäßig in Umfangsrichtung verteilt angeordnet sein. Die Anschläge sind, in Umfangsrichtung des Düsenkäfigs betrachtet, bevorzugt mittig der Ausnehmung angeordnet. Eine in Umfangsrichtung betrachtet gleichmäßige Abstützung der Membran wird dadurch erreicht. Unerwünscht ungleichmäßige mechanische Belastungen der Membran werden vermieden, ebenso wie mögliche Verkantungen bei Hin- und Her-Bewegung der Membran innerhalb des Düsenkäfigs und daraus resultierende Beeinträchtigungen der Isolierung höherfrequenter kleinamplitudiger Schwingungen während des Gebrauchs des Hydrolagers.

Die Ausnehmungen können im Wesentlichen trapezförmig ausgebildet sein, mit umfangsseitigen Begrenzungswänden, die sich in radialer Richtung erstrecken, wobei die Anschläge eine Erstreckung in radialer Richtung aufweisen, die im Wesentlichen der halben Erstreckung der Ausnehmungen in gleicher Richtung entspricht. Durch eine solche Ausgestaltung wird ein guter Kompromiss zwischen guter Abstützung der Membran bei Extremauslenkungen einerseits und vernachlässigbar geringe Überdeckung der Ausnehmungen der ersten Gitterstruktur durch die Stege der zweiten Gitterstruktur andererseits erreicht.

Die Anschläge können sich von radial außen der Ausnehmungen nach radial innen erstrecken. Von radial außen nach radial innen können sich die Anschläge zum Beispiel dann erstrecken, wenn sie einstückig ineinander übergehend und materialeinheitlich mit einer der Düsenscheiben, bevorzugt der dem Ausgleichsraum zugewandte Düsenscheibe, ausgebildet sind.

Die Anschläge können einstückig und materialeinheitlich mit der jeweiligen Düsenscheibe ausgebildet sein. Die Herstellung eines solchen Düsenkäfigs/Hydrolagers und auch dessen Montage sind dadurch einfach und kostengünstig. Die Gefahr von Montagefehlern ist dadurch auf ein Minimum reduziert.

Die Anschläge können, im Längsschnitt betrachtet, von radial außen nach innen bogenförmig axial in Richtung des Ausgleichsraums vorgewölbt sein. Durch die Wölbung in Richtung des Ausgleichsraums legt sich die Membran bei Einleitung von Schwingungen mit hohen Frequenzen und großen Amplituden allmählich an die Anschläge an. Mechanische Belastungen auf die Membran sind dadurch auf ein Minimum begrenzt, ebenso wie die Gefahr von Klappergeräuschen.

Als vorteilhaft hatte sich bewährt, wenn eine an die Anschläge angelegte gedachte Tangente mit der Achse des Hydrolagers einen Winkel von im wesentlichen 45° einschließt. Die Membran kann dadurch bei plötzlich im Hydrolager auftretenden Überdrücken weit genug ausweichen, ohne dass sie überdehnt würde und ohne dass Klappergeräusche entstehen.

Nach einer anderen Ausgestaltung können sich die Anschläge von radial innen der Ausnehmungen nach radial außen erstrecken. Eine solche Ausgestaltung ist vorteilhaft" wenn die zweite Gitterstruktur, bezogen auf die Düsenscheiben, separat erzeugt und im zentralen Bereich der Düsenscheiben festgelegt ist.

Die zweite Gitterstruktur kann durch einen kreisförmigen Zentralbereich gebildet sein, mit sich radial von innen nach außen erstreckenden Anschlägen. Eine solche Ausgestaltung ist von Vorteil, wenn die zweite Gitterstruktur separat erzeugt ist.

Die zweite Gitterstruktur kann, bezogen auf die zugehörige Düsenscheibe, separat erzeugt und mit der Düsenscheibe durch Befestigungsmittel verbunden sein. Hierbei ist von Vorteil, dass die Ausgestaltung und damit die Gebrauchseigenschaften der zweiten Gitterstruktur an die jeweiligen Gegebenheiten des Anwendungsfalles gut angepasst werden können. So könnten beispielsweise an sich identische Hydrolager mit unterschiedlichen zweiten Gitterstrukturen hergestellt werden. Dadurch kann unterschiedlichen Betriebsbedingungen Rechnung getragen werden, beispielsweise dem unterschiedlichen Gewicht der abgestützten Aggregate in unterschiedlich motorisierten Fahrzeugen derselben Baureihe.

Die Befestigungsmittel können durch Klemmen oder Schrauben gebildet sein.

Davon abweichend können die Befestigungsmittel durch eine Clip-Verbindung gebildet sein. Die Montage der zweiten Gitterstruktur am Düsenkäfig ist dadurch besonders einfach.

Die Clip-Verbindung kann durch Rastnasen an der zweiten Gitterstruktur gebildet sein, die in einen Hinterschnitt der Düsenscheibe einclipsbar sind. Der Hinterschnitt kann durch eine zentrale Durchbrechung in der Düsenscheibe gebildet sein. Zur Montage der zweiten Gitterstruktur werden die Rastnasen der Gitterstruktur lediglich durch die zentrale Durchbrechung der Düsenscheibe geführt, bis sie hinter dem Hinterschnitt einrasten. Eine solch einfache Verbindung ist auch im Hinblick auf ein sortenreines Recycling von Vorteil. Besteht der Düsenkäfig beispielsweise aus einem metallischen Werkstoff und die zweite Gitterstruktur aus einem polymeren Werkstoff, ist im Anschluss an die Gebrauchsdauer des Hydrolagers eine einfache Trennung der Teile möglich.

Die zweite Gitterstruktur kann aus einem polymeren Werkstoff oder aus Aluminium-Druckguss bestehen. Solche Gitterstrukturen sind einfach und kostengünstig herstellbar und weisen außerdem nur ein geringes Gewicht auf.

Außerdem betrifft die Erfindung einen Düsenkäfig für ein Hydrolager, umfassend eine erste und eine zweite Düsenscheibe, die einen Einbauraum für eine schwingfähige Membran begrenzen und in axialem Abstand zueinander benachbart angeordnet und miteinander verbunden sind, wobei zumindest eine der Düsenscheiben eine weitere zweite Gitterstruktur aufweist, die auf der der anderen Düsenscheibe axial abgewandten Seite der ersten Gitterstruktur der Düsenscheibe angeordnet ist. Eine solche Düsenscheibe kann, wie bei einem Baukastensystem, herkömmliche Düsenkäfige ohne zweite Gitterstruktur ersetzen, da der erfindungsgemäße Düsenkäfig den herkömmlichen Düsenkäfigen im Aufnahmebereich zwischen Kern und Gehäuse des Hydrolagers problemlos entsprechen kann; die zweite Gitterstruktur hat auf die Befestigung des Düsenkäfigs im Hydrolager keinen Einfluss.

### Kurzbeschreibung der Zeichnung

Vier Ausführungsbeispiele des erfindungsgemäßen Hydrolagers und des erfindungsgemäßen Düsenkäfigs werden nachfolgend anhand der Figuren 1 bis 8 näher beschrieben. Diese zeigen jeweils in schematischer Darstellung:
Figuren 1 und 2 ein erstes Ausführungsbeispiel eines erfindungsgemäßen Hydrolagers in geschnittener Darstellung, wobei in Figur 1 das Hydrolager in längsgeschnittener Darstellung gezeigt ist, und in Figur 2 ist ein erstes Ausführungsbeispiel des Düsenkäfigs des Hydrolagers aus Figur 1 in einer Draufsicht gezeigt,
Figuren 3 und 4 ein zweites Ausführungsbeispiel eines Düsenkäfigs, der in Figur 3 in längsgeschnittener Darstellung und in Figur 4 in einer Draufsicht gezeigt ist,
Figuren 5 und 6 ein drittes Ausführungsbeispiel eines Düsenkäfigs, der in Figur 5 in längsgeschnittener Darstellung und in Figur 6 in einer Draufsicht gezeigt ist und
Figuren 7 und 8 ein viertes Ausführungsbeispiel eines Düsenkäfigs, der in Figur 7 in längsgeschnittener Darstellung und in Figur 8 in einer Draufsicht gezeigt ist.

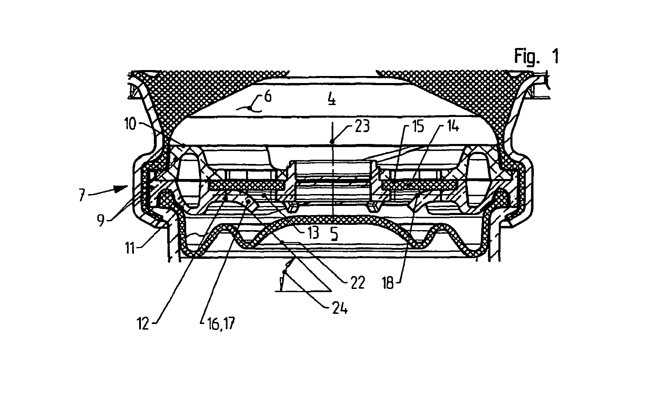

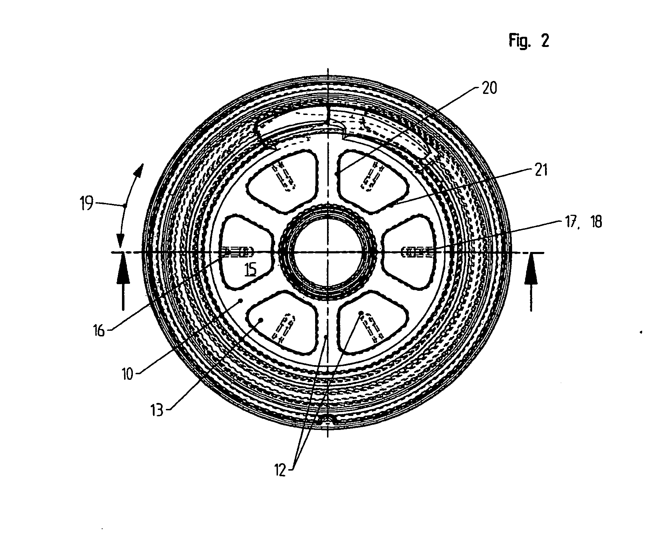

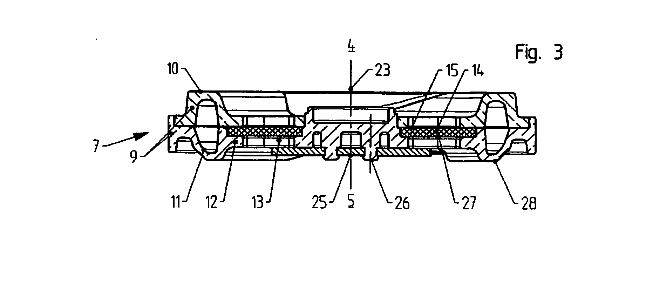

Die Düsenkäfige aus den Ausführungsbeispielen Figuren 3 bis 8 sind jeweils als Einzelteile dargestellt und können anstelle des Düsenkäfigs aus Ausführungsbeispiel Figuren 1 und 2 in einem solchen Hydrolager zur Anwendung gelangen.

### Ausführung der Erfindung

In den Figuren 1 bis 8 sind vier Ausführungsbeispiele des erfindungsgemäßen Düsenkäfigs gezeigt, wobei im ersten Ausführungsbeispiel gemäß Figuren 1 und 2 der Düsenkäfig in einem Hydrolager angeordnet ist.

Mit Ausnahme des erfindungsgemäßen Düsenkäfigs weist das Hydrolager einen üblichen Aufbau auf und umfasst einen Kern 1 und ein Gehäuse 2, die durch eine im wesentlichen hohlkegelförmige Tragfeder 3 aus gummielastischem Werkstoffen miteinander verbunden sind. Der Arbeitsraum 4 und der Ausgleichsraum 5 sind jeweils mit Dämpfungsflüssigkeit 6 gefüllt und durch die Trennwand 7 flüssigkeitsleitend miteinander verbunden. Für die flüssigkeitsleitende Verbindung weist die Trennwand 7 einen Dämpfungskanal 8 zur Dämpfung tieferfrequenter großamplitudiger Schwingungen auf. Außerdem umfasst die Trennwand 7 den erfindungsgemäßen Düsenkäfig 9. Der erfindungsgemäße Düsenkäfig 9 weist zwei mit axialem Abstand zueinander benachbart angeordnete Düsenscheiben 10,11 auf, die jeweils eine erste Gitterstruktur 12 mit Ausnehmungen 13 aufweisen. In dem durch den Abstand gebildeten Spalt 14 zwischen den beiden Düsenscheiben 10, 11 ist eine gummielastische Membran 15 schwingfähig angeordnet, zur Isolierung höherfrequenter kleinamplitudiger Schwingungen.

In dem hier gezeigten Ausführungsbeispiel weist nur die im Ausgleichsraum 5 angeordnete Düsenscheibe 11 eine weitere zweite Gitterstruktur 16 mit Anschlägen 17 für die Membran 15 auf. Die zweite Gitterstruktur 16 mit den Anschlägen 17 stützt die Membran 15 dann, wenn Schwingungen mit hohen Frequenzen und großen Amplituden in das Hydrolager eingeleitet werden. Durch die Abstützung der Membran 15 in dem zuvor geschilderten Betriebszustands werden Klappergeräusche zuverlässig vermieden. Die zweite Gitterstruktur 16 mit den Anschlägen 17 ist auf der der Membran 15 axial abgewandten Seite der ersten Gitterstruktur 12 der Düsenscheibe 11 angeordnet. Die erste Gitterstruktur 12 und die zweite Gitterstruktur 16 bilden eine sich in axialer Richtung erstreckende Rampe 18 für die Membran 15, an die sich diese bedarfsweise angelegt.

In allen Ausführungsbeispielen weist die zweite Gitterstruktur 16 stegförmige Anschläge 17 für die Membran auf, die die Ausnehmungen 13 der ersten Gitterstruktur 12 in radialer Richtung teilweise überdecken. In allen Ausführungsbeispielen entspricht die Anzahl der Anschläge 17 der Anzahl der Ausnehmungen 13, die Anschläge 17 und die Ausnehmungen 13 sind jeweils gleichmäßig in Umfangsrichtung verteilt angeordnet und die Anschläge 17 sind, in Umfangsrichtung 19 des Düsenkäfigs 9 betrachtet, mittig in der Ausnehmungen 13 angeordnet. Außerdem sind die Ausnehmungen 13 in den Ausführungsbeispielen trapezförmig gestaltet, mit umfangsseitigen Begrenzungswänden 20, 21, die sich in radialer Richtung erstrecken, wobei die Anschläge 17 eine Erstreckung in radialer Richtung aufweisen, die im Wesentlichen der halben Erstreckung der Ausnehmungen 13 in gleicher Richtung entsprechen.

Das Verhältnis aus der Fläche der Ausnehmungen 13 zu den projizierten Flächen der Anschläge 17 beträgt in den hier gezeigten Ausführungsbeispielen etwa 20. Dadurch, dass die projizierte Fläche der Anschläge 17 bezogen auf die Fläche der Ausnehmungen 13 sehr klein ist, hat die zweite Gitterstruktur 16 keinen nachteiligen Einfluss auf die Wirksamkeit der Isolierung höherfrequenter kleinamplitudiger Schwingungen des Hydrolagers. Trotzdem löst die zweite Gitterstruktur 16 gut die Aufgabe der Abstützung der Membran 15, wenn Schwingungen hoher Frequenz und großer Amplitude in das Hydrolager eingeleitet werden. Durch die Abstützung der Membran 15 durch die zweite Gitterstruktur 16 werden Klappergeräusche wirkungsvoll verhindert.

Das Ausführungsbeispiel aus den Figuren 1 und 2 weist Anschläge 17 auf, die sich von radial außen nach radial innen erstrecken und einstückig und materialeinheitlich mit der Düsenscheibe 11 ausgebildet sind. Die Anschläge 17 sind, wie in Figur 1 zu erkennen, von radial außen nach innen bogenförmig axial in Richtung des Ausgleichsraums 5 vorgewölbt, wobei eine an die Anschläge 17 angelegte gedachte Tangente 22 mit der Achse 23 des Hydrolagers einen Winkel 24 von im wesentlichen 45° einschließt. Die sich in axialer Richtung erstreckende Rampe 18 für die Membran 15 ist im gezeigten Ausführungsbeispiel gerundet ausgeführt. Dadurch wird die Oberfläche der Membran 15 besonders gut vor Beschädigungen / mechanischer Überbeanspruchung geschützt.

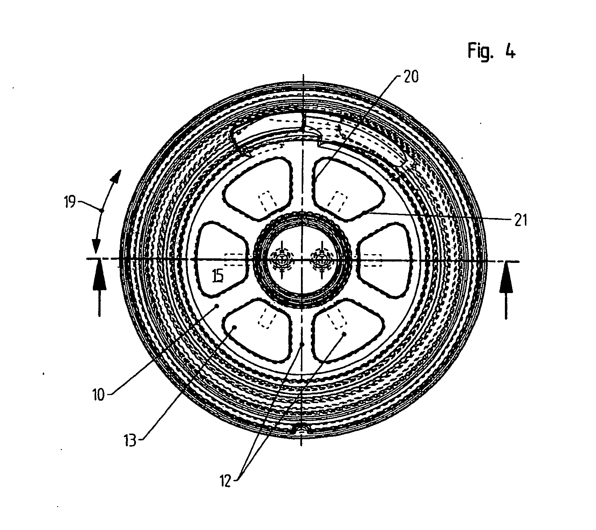

Das zweiter Ausführungsbeispiel aus den Figuren 3 und 4 unterscheidet sich vom ersten Ausführungsbeispiel aus den Figuren 1 und 2 dadurch, dass die zweite Gitterstruktur 16 als separates Bauteil ausgebildet ist und einen Zentralbereich 25 aufweist, mit dem die zweite Gitterstruktur 16 mittels Befestigungsmitteln 26, die in diesem Ausführungsbeispiel durch Klemmen 27 oder Schrauben 28 gebildet sind, an der Düsenscheibe 11 befestigt ist. Die Anschläge 17 erstrecken sich vom radialer inneren kreisförmigen Zentralbereich 25 radialer nach außen. Im Gegensatz zu der gerundeten Rampe 18 aus dem ersten Ausführungsbeispiel ist die Rampe 18 in diesem Ausführungsbeispiel stufenförmig ausgebildet.

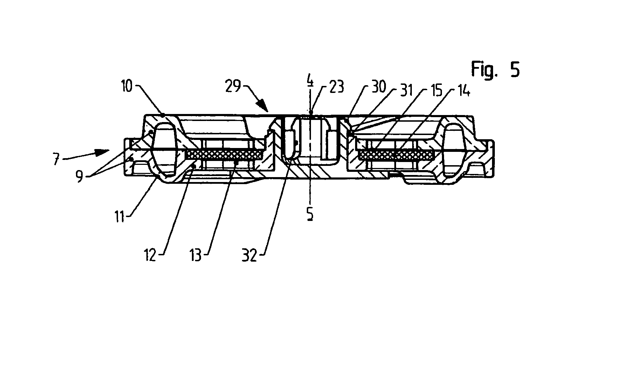

Die beiden Ausführungsbeispiele Figuren 5 und 6 sowie Figuren 7 und 8 zeigen einen Düsenkäfig 9, ähnlich dem Düsenkäfig 9 aus Ausführungsbeispiel Figuren 3 und 4.

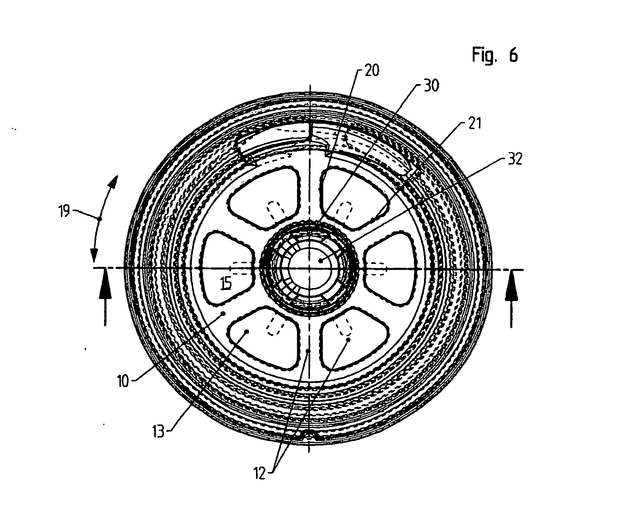

Im Ausführungsbeispiel gemäß Figuren 5 und 6 ist die zweite Gitterstruktur 16, bezogen auf die Düsenscheiben 10, 11 ebenfalls separat erzeugt, wobei die zweite Gitterstruktur 16 in diesem Ausführungsbeispiel aus einem polymeren Werkstoff besteht. Die zweite Gitterstruktur 16 ist durch ein Befestigungsmittel 26 in Form einer Clip-Verbindung 29 mit der Düsenscheibe 11 verbunden, wobei die Clip-Verbindung 29 Rastnasen 30 aufweist, die in radialer Richtung elastisch nachgiebig ausgebildet sind und dadurch in einen Hinterschnitt 31 der Düsenscheibe 11 einclipsbar sind. In diesem Ausführungsbeispiel sind vier gleichmäßig in Umfangsrichtung angeordnete Rastnasen 30 vorgesehen. Der Hinterschnitt 31 wird durch eine zentrale Durchbrechung 32 in der Düsenscheibe 11 gebildet.

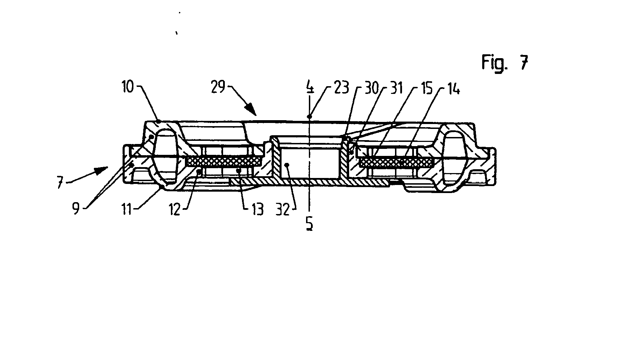

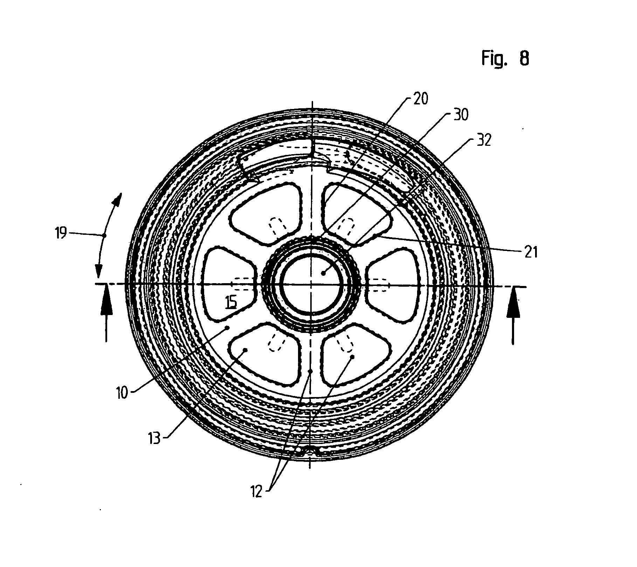

Im Ausführungsbeispiel gemäß Figuren 7 und 8 ist eine weiteres Ausführungsbeispiel, ähnlich dem zuvor beschriebenen gezeigt. Die zweite Gitterstruktur 16 besteht aus Aluminium-Druckguss und ist auf ihrer dem Arbeitsraum 4 axial zugewandten Seite im Bereich ihrer Stirnseite radial nach außen umgebördelt und wird dadurch am Hinterschnitt 31, der auch hier durch eine zentrale Durchbrechung 32 der Düsenscheibe 11 gebildet ist, gehalten.

## Patentansprüche

1. Hydrolager, umfassend einen Kern (1) und ein Gehäuse (2), die durch eine im wesentlichen hohlkegelförmige Tragfeder (3) aus gummielastischem Werkstoff miteinander verbunden sind und einen Arbeits- (4) und einen Ausgleichsraum (5), die jeweils mit Dämpfungsflüssigkeit (6) gefüllt und strömungsleitend miteinander verbunden sind, wobei der Arbeits- (4) und der Ausgleichsraum (5) auf ihren einander axial zugewandten Seiten durch eine Trennwand (7) voneinander getrennt sind, wobei die Trennwand (7) einen den Arbeits-(4) und den Ausgleichsraum (5) verbindenden Dämpfungskanal (8) zur Dämpfung tieferfrequenter Schwingungen aufweist und einen Düsenkäfig (9) umfasst, der durch zwei mit axialem Abstand zueinander benachbart angeordnete Düsenscheiben (10, 11) gebildet ist, die jeweils eine erste Gitterstruktur (12) mit Ausnehmungen (13) aufweisen, wobei in dem durch den Abstand gebildeten Spalt (14) eine Membran (15) zur Isolierung höherfrequenter Schwingungen schwingfähig angeordnet ist, **dadurch gekennzeichnet, dass** zumindest eine der Düsenscheiben (11) zumindest eine weitere zweite Gitterstruktur (16) mit Anschlägen (17) für die Membran (15) aufweist, die auf der der Membran (15) axial abgewandten Seite der ersten Gitterstruktur (12) der Düsenscheibe (11) angeordnet ist und dass die erste Gitterstruktur (12) und die zweite Gitterstruktur (16) eine sich in axialer Richtung erstreckende Rampe (18) für die Membran (15) bilden.

2. Hydrolager nach Anspruch 1, **dadurch gekennzeichnet, dass** nur die im Ausgleichsraum (5) angeordnete Düsenscheibe (11) die zweite Gitterstruktur (16) aufweist.

3. Hydrolager nach einem der Ansprüche 1 oder 2, **dadurch gekennzeichnet, dass** die zweite Gitterstruktur (16) stegförmige Anschläge (17) für die Membran (15) aufweist, die die Ausnehmungen (13) der ersten Gitterstruktur (12) in radialer Richtung teilweise überdecken.

4. Hydrolager nach einem der Ansprüche 1 bis 3, **dadurch gekennzeichnet, dass** die Anzahl der Anschläge (17) der Anzahl der Ausnehmungen (13) entspricht.

5. Hydrolager nach einem der Ansprüche 1 bis 4, **dadurch gekennzeichnet, dass** die Anschläge (17) und die Ausnehmungen (13) jeweils gleichmäßig in Umfangsrichtung (19) verteilt angeordnet sind.

6. Hydrolager nach einem der Ansprüche 1 bis 5, **dadurch gekennzeichnet, dass** die Anschläge (17), in Umfangsrichtung (19) des Düsenkäfigs (9) betrachtet, mittig der Ausnehmungen (13) angeordnet sind.

7. Hydrolager nach einem der Ansprüche 1 bis 6, **dadurch gekennzeichnet, dass** die Ausnehmungen (13) im wesentlichen trapezförmig ausgebildet sind, mit umfangsseitigen Begrenzungswänden (20, 21), die sich in radialer Richtung erstrecken, und dass die Anschläge (17) eine Erstreckung in radialer Richtung aufweisen, die im wesentlichen der halben Erstreckung der Ausnehmungen (13) in gleicher Richtung entspricht.

8. Hydrolager nach einem der Ansprüche 1 bis 7, **dadurch gekennzeichnet, dass** die Anschläge (17) einstückig und materialeinheitlich mit der jeweiligen Düsenscheibe (10, 11) ausgebildet sind.

9. Hydrolager nach einem der Ansprüche 1 bis 8, **dadurch gekennzeichnet, dass** sich die Anschläge (17) von radial außen der Ausnehmungen (13) nach radial innen erstrecken.

10. Hydrolager nach einem der Ansprüche 1 bis 9, **dadurch gekennzeichnet, dass** die Anschläge (17), im Längsschnitt betrachtet, von radial außen nach innen bogenförmig axial in Richtung des Ausgleichsraums (5) vorgewölbt sind.

11. Hydrolager nach Anspruch 10, **dadurch gekennzeichnet, dass** eine an die Anschläge (17) angelegte gedachte Tangente (22) mit der Achse (23) des Hydrolagers einen Winkel (24) von im Wesentlichen 45° einschließt.

12. Hydrolager nach einem der Ansprüche 1 bis 8, **dadurch gekennzeichnet, dass** sich die Anschläge (17) von radial innen der Ausnehmungen (13) nach radial außen erstrecken.

13. Hydrolager nach Anspruch 12, **dadurch gekennzeichnet, dass** die zweite Gitterstruktur (16) durch einen kreisförmigen Zentralbereich (25) gebildet ist, mit sich radial von innen nach außen erstreckenden Anschlägen (17).

14. Hydrolager nach einem der Ansprüche 1 bis 13, **dadurch gekennzeichnet, dass** die zweite Gitterstruktur (16), bezogen auf die zugehörige Düsenscheibe (11), separat erzeugt und mit der Düsenscheibe (11) durch Befestigungsmittel (26) verbunden ist.

15. Hydrolager nach Anspruch 14, **dadurch gekennzeichnet, dass** die Befestigungsmittel (26) durch Klemmen (27) oder Schrauben (28) gebildet sind.

16. Hydrolager nach Anspruch 14, **dadurch gekennzeichnet, dass** die Befestigungsmittel (26) durch eine Clip-Verbindung (29) gebildet sind.

17. Hydrolager nach Anspruch 16, **dadurch gekennzeichnet, dass** die Clip-Verbindung (29) durch Rastnasen (30) an der zweiten Gitterstruktur (16) gebildet ist, die in einen Hinterschnitt (31) der Düsenscheibe (11) einclipsbar sind.

18. Hydrolager nach Anspruch 17, **dadurch gekennzeichnet, dass** der Hinterschnitt (31) durch eine zentrale Durchbrechung (32) in der Düsenscheibe (11) gebildet ist.

19. Hydrolager nach einem der Ansprüche 1 bis 18, **dadurch gekennzeichnet, dass** die zweite Gitterstruktur (16) aus einem polymeren Werkstoff besteht.

20. Hydrolager nach einem der Ansprüche 1 bis 18, **dadurch gekennzeichnet, dass** die zweite Gitterstruktur (16) aus Aluminium-Druckguss besteht.

21. Düsenkäfig für ein Hydrolager, umfassend eine erste (10) und eine zweite Düsenscheibe (11), die einen Einbauraum für eine schwingfähige Membran (15) begrenzten und in axialem Abstand zueinander benachbart angeordnet und miteinander verbunden sind, **dadurch gekennzeichnet, dass** zumindest eine der Düsenscheiben (10, 11) eine weitere zweite Gitterstruktur (16) aufweist, die auf der der anderen Düsenscheibe (11, 10) axial abgewandten Seite der ersten Gitterstruktur (12) der Düsenscheibe (10, 11) angeordnet ist.

## Claims

1. Hydraulic mount, comprising a core (1) and a housing (2) which are connected to one another by means of an essentially hollow-conical bearing spring (3) made from elastomeric material, and a working space (4) and compensating space (5) which are in each case filled with damping fluid (6) and connected flow-conductively to one another, the working space (4) and compensating space (5) being separated from one another on their sides axially facing one another by means of a partition (7), the partition (7) having a damping duct (8), connecting the working space (4) and compensating space (5), for the damping of lower-frequency oscillations, and comprising a nozzle cage (9) which is formed by two nozzle discs (10, 11) which are arranged adjacently to one another with axial clearance and have in each case a first grid structure (12) with recesses (13), a diaphragm (15) for the insulation of higher-frequency oscillations being arranged oscillatably in the gap (14) formed by the clearance, **characterized in that** at least one of the nozzle discs (11) has at least one further second grid structure (16) with abutments (17) for the diaphragm (15), which second grid structure is arranged on that side of the first grid structure (12) of the nozzle disc (11) which faces axially away from the diaphragm (15), and **in that** the first grid structure (12) and second grid structure (16) form for the diaphragm (15) a ramp (18) which extends in the axial direction.

2. Hydraulic mount according to Claim 1, **characterized in that** only the nozzle disc (11) arranged in the compensating space (5) has the second grid structure (16).

3. Hydraulic mount according to one of Claims 1 and 2, **characterized in that** the second grid structure (16) has web-like abutments (17) for the diaphragm (15) which partially cover the recesses (13) of the first grid structure (12) in the radial direction.

4. Hydraulic mount according to one of Claims 1 to 3, **characterized in that** the number of abutments (17) corresponds to the number of recesses (13).

5. Hydraulic mount according to one of Claims 1 to 4, **characterized in that** the abutments (17) and recesses (13) are in each case arranged so as to be distributed uniformly in the circumferential direction (19).

6. Hydraulic mount according to one of Claims 1 to 5, **characterized in that** the abutments (17) are arranged in the middle of the recesses (13), as seen in the circumferential direction (19) of the nozzle cage (9).

7. Hydraulic mount according to one of Claims 1 to 6, **characterized in that** the recesses (13) are of essentially trapezoidal design, with circumferential boundary walls (20, 21) which extend in the radial direction, and **in that** the abutments (17) have an extent in the radial direction which corresponds essentially to half the extent of the recesses (13) in the same direction.

8. Hydraulic mount according to one of Claims 1 to 7, **characterized in that** the abutments (17) are formed in one piece and in the materially unitary manner with the respective nozzle disc (10, 11).

9. Hydraulic mount according to one of Claims 1 to 8, **characterized in that** the abutments (17) extend radially inwards from radially outside the recesses (13).

10. Hydraulic mount according to one of Claims 1 to 9, **characterized in that**, as seen in longitudinal section, the abutments (17) are arcuately arched inwards from radially outside axially in the direction of the compensating space (5).

11. Hydraulic mount according to Claim 10, **characterized in that** an imaginary tangent (22) drawn to the abutments (17) forms with the axis (23) of the hydraulic mount an angle (24) of essentially 45°.

12. Hydraulic mount according to one of Claims 1 to 8, **characterized in that** the abutments (17) extend radially outwards from radially inside the recesses (13).

13. Hydraulic mount according to Claim 12, **characterized in that** the second grid structure (16) is formed by a circular central region (25) with abutments (17) which extend radially outwards from inside.

14. Hydraulic mount according to one of Claims 1 to 13, **characterized in that** the second grid structure (16) is produced separately from the associated nozzle disc (11) and is connected to the nozzle disc (11) by fastening means (26).

15. Hydraulic mount according to Claim 14, **characterized in that** the fastening means (26) are formed by clamps (27) or screws (28).

16. Hydraulic mount according to Claim 14, **characterized in that** the fastening means (26) are formed by a snap connection (29).

17. Hydraulic mount according to Claim 16, **characterized in that** the snap connection (29) is formed by latching noses (30) which are located on the second grid structure (16) and which can be snapped into an undercut (31) of the nozzle disc (11).

18. Hydraulic mount according to Claim 17, **characterized in that** the undercut (31) is formed by a central perforation (32) in the nozzle disc (11).

19. Hydraulic mount according to one of Claims 1 to 18, **characterized in that** the second grid structure (16) consists of a polymeric material.

20. Hydraulic mount according to one of Claims 1 to 18, **characterized in that** the second grid structure (16) consists of die-cast aluminium.

21. Nozzle cage for a hydraulic mount, comprising a first (10) and a second (11) nozzle disc which delimit an installation space for an oscillatable diaphragm (15) and are arranged adjacently to one another with axial clearance and are connected to one another, **characterized in that** at least one of the nozzle discs (10, 11) has a further second grid structure (16) which is arranged on that side of the first grid structure (12) of the nozzle disc (10, 11) which faces axially away from the other nozzle disc (11, 10).

## Revendications

1. Support hydraulique, comprenant un coeur (1) et un boîtier (2), qui sont reliés l'un à l'autre au moyen d'un ressort de support (3) de forme essentiellement conique creuse en matériau de caoutchouc élastique, ainsi qu'une chambre de travail (4) et une chambre d'équilibrage (5), qui sont respectivement remplies d'un liquide d'amortissement (6) et qui sont reliées l'une à l'autre en relation d'écoulement, dans lequel la chambre de travail (4) et la chambre d'équilibrage (5) sont séparées l'une de l'autre au moyen d'une paroi de séparation (7) sur leurs côtés tournés axialement l'un vers l'autre, dans lequel la paroi de séparation (7) présente un canal d'amortissement (8) relisant la chambre de travail (4) et la chambre d'équilibrage (5) pour l'amortissement d'oscillations à basse fréquence et comprend une cloison de découplage (9), qui est formée par deux disques de découplage (10, 11) disposés à proximité l'un de l'autre avec un écartement axial, qui présentent chacun une première structure de grille (12) avec des évidements (13), dans lequel une membrane (15) capable d'osciller est disposée dans la fente (14) formée par l'écartement pour l'isolation d'oscillations à haute fréquence, **caractérisé en ce qu'**au moins un des disques de découplage (11) présente au moins une deuxième structure de grille supplémentaire (16) avec des butées (17) pour la membrane (15), qui est disposée sur le côté de la première structure de grille (12) du disque de découplage (11) qui est situé axialement à l'opposé de la membrane (15), et **en ce que** la première structure de grille (12) et la deuxième structure de grille (16) forment une rampe (18) s'étendant en direction axiale pour la membrane (15).

2. Support hydraulique selon la revendication 1, **caractérisé en ce que** seul le disque de découplage (11) disposé dans la chambre d'équilibrage (5) présente la deuxième structure de grille (16).

3. Support hydraulique selon l'une quelconque des revendications 1 ou 2, **caractérisé en ce que** la deuxième structure de grille (16) présente des butées en forme de nervures (17) pour la membrane (15), qui recouvrent partiellement les évidements (13) de la première structure de grille (12) en direction radiale.

4. Support hydraulique selon l'une quelconque des revendications 1 à 3, **caractérisé en ce que** le nombre de butées (17) correspond au nombre d'évidements (13).

5. Support hydraulique selon l'une quelconque des revendications 1 à 4, **caractérisé en ce que** les butées (17) et les évidements (13) sont respectivement disposés avec une répartition uniforme dans la direction périphérique (19).

6. Support hydraulique selon l'une quelconque des revendications 1 à 5, **caractérisé en ce que** les butées (17), considérées dans la direction périphérique (19) de la cloison de découplage (9), sont disposées au milieu des évidements (13).

7. Support hydraulique selon l'une quelconque des revendications 1 à 6, **caractérisé en ce que** les évidements (13) présentent une forme sensiblement trapézoïdale, avec des parois de limitation (20, 21) du côté périphérie qui s'étendent en direction radiale, et **en ce que** les butées (17) présentent une extension en direction radiale, qui correspond sensiblement à la moitié de l'extension des évidements (13) dans la même direction.

8. Support hydraulique selon l'une quelconque des revendications 1 à 7, **caractérisé en ce que** les butées (17) sont réalisées d'une seule pièce et en une seule matière avec le disque de découplage respectif (10, 11).

9. Support hydraulique selon l'une quelconque des revendications 1 à 8, **caractérisé en ce que** les butées (17) s'étendent depuis le côté radialement extérieur des évidements (13) vers le côté radialement inférieur.

10. Support hydraulique selon l'une quelconque des revendications 1 à 9, **caractérisé en ce que** les butées (17), considérées en coupe longitudinale, sont précintrées en forme d'arc, du côté radialement extérieur vers l'intérieur, axialement en direction de la chambre d'équilibrage (5).

11. Support hydraulique selon la revendication 10, **caractérisé en ce qu'**une tangente imaginaire (22) menée sur les butées (17) forme un angle (24) d'environ 45° avec l'axe (23) du support hydraulique.

12. Support hydraulique selon l'une quelconque des revendications 1 à 8, **caractérisé en ce que** les butées (17) s'étendent depuis le côté radialement intérieur des évidements (13) vers le côté radialement extérieur.

13. Support hydraulique selon la revendication 12, **caractérisé en ce que** la deuxième structure de grille (16) est formée par une zone centrale circulaire (25), avec des butées (17) s'étendant radialement de l'intérieur vers l'extérieur.

14. Support hydraulique selon l'une quelconque des revendications 1 à 13, **caractérisé en ce que** la deuxième structure de grille (16), rapportée au disque de découplage associe (11), est fabriquée séparément et est assemblée au disque de découplage (11) par des moyens de fixation (26).

15. Support hydraulique selon la revendication 14, **caractérisé en ce que** les moyens de fixation (26) sont formés par des pinces (27) ou des vis (28).

16. Support hydraulique selon la revendication 14, **caractérisé en ce que** les moyens de fixation (26) sont formés par un assemblage à déclic (29).

17. Support hydraulique selon la revendication 16, **caractérisé en ce que** l'assemblage à déclic (29) est formé par des ergots d'encliquetage (30) sur la deuxième structure de grille (16), qui peuvent s'accrocher dans une contre-dépouille (31) du disque de découplage (11).

18. Support hydraulique selon la revendication 17, **caractérisé en ce que** la contre-dépouille (31) est formée par une ouverture centrale (32) dans le disque de découplage (11).

19. Support hydraulique selon l'une quelconque des revendications 1 à 18, **caractérisé en ce que** la deuxième structure de grille (16) est constituée d'un matériau polymère.

20. Support hydraulique selon l'une quelconque des revendications 1 à 18, **caractérisé en ce que** la deuxième structure de grille (16) est constituée d'une pièce en aluminium moulée sous pression.

21. Cloison de découplage pour un support hydraulique, comprenant un premier (10) et un deuxième (11) disques de découplage, qui délimitent une chambre de montage pour une membrane (15) capable d'osciller et qui sont disposés à proximité l'un de l'autre avec un écartement axial et qui sont reliés l'un à l'autre, **caractérisée en ce qu'**au moins un des disques de découplage (10, 11) présente une deuxième structure de grille supplémentaire (16), qui est disposée sur le côté de la première structure de grille (12) du disque de découplage (10, 11) situé axialement à l'opposé de l'autre disque de découplage (10, 11).
